Europäisches Patentamt

**European Patent Office**

**Office européen des brevets**

(19)

(11) Numéro de publication: **0 040 146**

**A1**

(12) # DEMANDE DE BREVET EUROPEEN

(21) Numéro de dépôt: **81400735.7**

(22) Date de dépôt: **08.05.81**

(51) Int. Cl.³: **H 02 J 13/00**

(30) Priorité: **14.05.80 FR 8010861**

(43) Date de publication de la demande:
**18.11.81 Bulletin 81/46**

(84) Etats contractants désignés:
**AT BE CH DE GB IT LI LU NL SE**

(71) Demandeur: **Alberti, Rosette**
**7 Rue Marie Bonaparte**
**F-92210 Saint Cloud(FR)**

(72) Inventeur: **Alberti, Rosette**
**7 Rue Marie Bonaparte**
**F-92210 Saint Cloud(FR)**

(74) Mandataire: **Lemonnier, André**
**4 Boulevard Saint Denis**
**F-75010 Paris(FR)**

(54) **Disjoncteur de puissance à seuil de fonctionnement téléréglable.**

(57) La présente invention concerne un disjoncteur de puissance à seuil de fonctionnement téléréglable.

Le déclenchement du disjoncteur 1 étant assuré par un déclencheur électro-magnétique 2, on prévoit au moins un capteur 9a à 9f de détection d'une position prédéterminée de l'élément de commande 3 du déclencheur sensible à l'intensité consommée, et ce capteur envoie lorsque ladite position est atteinte et sous le contrôle d'un récepteur de télécommande centralisée 11, le courant de commande au déclencheur 2.

L'invention est applicable pour la modulation de la puissance consommable par les usagers et son adaptation à la capacité de production.

Fig.1

EP 0 040 146 A1

1

## Disjoncteur de puissance à seuil de fonctionnement téléréglable.

Dans la demande de brevet allemande publiée N° 2.404.234 on a déjà proposé un disjoncteur de puissance à seuil de fonctionnement téléréglable.

En dehors du mode de réalisation comportant deux éléments limiteurs en série, tels que des bilames, dont l'un peut être shunté par l'organe de télécommande, ce brevet suggère également un disjoncteur avec un seul organe limiteur thermique tel qu'un bilame avec un dispositif de chauffage additionnel de ce bilame qui est mis sous tension par l'organe de télécommande pour abaisser le seuil de fonctionnement du déclencheur en créant une prédéformation du bilame.

Le mode de réalisation avec deux éléments limiteurs en série est complexe et encombrant, ce qui rend impossible de loger le dispositif dans les formats de boitiers usuels. En outre, lorsqu'il s'agit de deux bilames comme proposé dans ce brevet, il y a une influence thermique entre les bilames qui rend le réglage des deux seuils pratiquement impossible. Cet inconvénient est encore beaucoup plus marqué dans le cas où, comme proposé comme unique solution dans ce brevet du mode de réalisation à un seul élément détecteur, on combine le bilame unique avec un dispositif de chauffage qui est mis en circuit par le récepteur de télécommande centralisée pour réduire l'intensité pour laquelle le disjoncteur décleche. Outre que le dispositif de chauffage consomme d'une manière continue pendant toute la période de délestage, l'influence d'un dispositif de chauffage annexe sur le seuil de déclenchement du déclencheur à bilame est très indéterminée et le réglage du seuil de déclenchement est pratiquement impossible.

Dans le brevet français N° 79.21897 du 31 Aout 1979, on a proposé un disjoncteur de puissance à seuil de fonctionnement téléréglable dans lequel le téléréglage est réalisé par la mise en circuit ou hors-circuit ou modification de la valeur d'une résistance de dérivation montée en parallèle avec le détecteur du déclencheur de façon à modifier la fraction de l'intensité totale qui agit sur le détecteur du déclencheur. Ce mode de réalisation présente l'avantage que le seuil de fonctionnement du détecteur du déclencheur correspond, quel que soit le seuil de réglage, à la même intensité traversant le détecteur du déclencheur, ce qui facilite le réglage et assure une stabilité de fonctionnement. Le contacteur de la commande de téléréglage assurant la mise en circuit ou hors-circuit des résistances de dérivation n'est pas soumis à une tension aux bornes lors de la coupure donc sujet à la création d'un arc puisqu'il est shunté au moins par le détecteur du déclencheur mais il doit néanmoins présenter une résistance très faible en laissant passer une intensité importante, ce qui peut poser des problèmes pour sa réalisation et son encombrement.

La présente invention a pour but de remédier à ces inconvénients, en proposant un disjoncteur de puissance à seuil de déclenchement téléréglable dans lequel le contacteur de la commande de téléréglage est actionné éventuellement sous tension mais est traversé par un courant très faible pendant un temps très court, ce qui permet de le réaliser par un relais de très faible puissance et éventuellement par un simple transistor. L'invention est basée sur le fait que les disjoncteurs de puissance sont également en règle générale des disjoncteurs différentiels comportant un transformateur différentiel comparant les courants parcourant les différentes phases et envoyant un courant de puissance réduite, fonction du déséquilibre entre phases, à un relais déclencheur qui commande la serrure du disjoncteur. Le disjoncteur différentiel peut fonctionner sous des courants de fuite de l'ordre de quelques dizaines de milliampères.

D'autre part les éléments de commande des déclencheurs des disjoncteurs de puissance ont en général, par exemple dans le cas des bilames, des courbes de déplacement fonction du courant qui les traverse,bien définies,sous réserve qu'ils ne soient pas soumis à des influences extérieures.

L'invention a en conséquence pour objet un disjoncteur de puissance à téléréglage du seuil de fonctionnement comportant au moins un capteur de détection d'une position prédéterminée de l'élément de commande du déclencheur sensible à l'intensité consommée, ce capteur envoyant, lorsque ladite position est atteinte et sous le contrôle d'un récepteur de télécommande centralisée, un courant de commande au déclencheur du disjoncteur.

Le capteur peut être un simple élément de contact qui vient en contact avec le bilame constituant l'élément de commande du déclencheur au cours de la déformation de celui-ci, ce contact élastique ayant une position de fin de course réglable.

Dans le cas d'un disjoncteur de puissance du type différentiel, le capteur établit un courant de fuite supérieur au seuil du disjoncteur différentiel entre un point d'une phase en aval du transformateur différentiel et un point d'une autre phase en amont dudit transformateur différentiel. L'apparition de ce courant de fuite fait déclencher le disjoncteur par son détecteur différentiel et il suffit donc d'un courant de l'ordre de quelques dizaines de milliampères agissant pendant le délai de déclenchement de la serrure du disjoncteur. En conséquence le disjoncteur de puissance peut comporter une pluralité de capteurs agissant pour différentes intensités de courant traversant le capteur de détection et correspondant à des fractions de l'intensité nominale de déclenchement du capteur de détection, les capteurs choisis en fonction des puissances normale et de crise allouées à l'usager étant connectés au moins pour l'un d'entre eux par l'intermédiaire d'un contacteur commandé par le récepteur de télécommande centralisée. Cette échelle de réglage par les capteurs est de préférence combinée avec la possibilité de réglage du seuil par résistances de dérivation usuelle. Ceci permet d'obtenir une plage de réglage beaucoup plus étendue à la fois pour la puissance maximale et pour la puissance de crise et même de multiplier les seuils de réglage pour assurer une modulation plus fine de la puissance utilisable chez chaque usager en fonction de la puissance disponible.

L'invention sera décrite plus en détail ci-après sous forme de deux exemples de réalisation avec référence au dessin ci-annexé dans lequel :

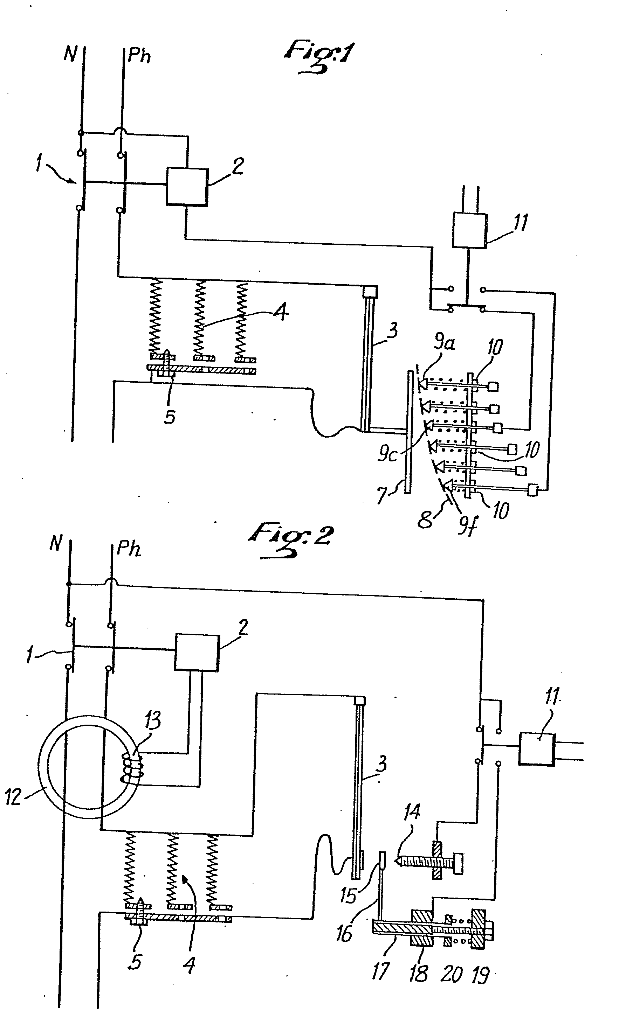

La figure 1 est un schéma électrique d'un disjoncteur de puissance à téléréglage du seuil de fonctionnement conformément à l'invention et la figure 2 est un schéma électrique correspondant appliqué à un disjoncteur dit différentiel.

Dans les deux modes de réalisation la référence 1 désigne le contacteur principal du disjoncteur coupant la phase Ph et le neutre N et éventuellement les autres phases et la référence 2 l'enroulement de commande d'ouverture du contacteur. 3 désigne l'élément détecteur de l'intensité représenté par un bilame mais qui pourrait être un relais à attraction progressive de l'armature ou un dispositif électro-magnétique à déviation du type ampèremètre. La référence 4 désigne un ensemble de résistances de calibrage en parallèle avec l'élément détecteur qui, d'une manière connue, peuvent être mises en circuit par des éléments de contact tels que les vis 6 pour dériver une fraction du courant de phase de manière que seule une fraction de l'intensité consommée influence l'élément détecteur.

Dans le mode de réalisation de la figure 1, la déflexion du bilame 3 commande le déplacement d'une pièce de contact 7, qui en pratique est une lame perpendiculaire au plan de la figure, le déplacement de cette lame fonction de l'intensité étant représenté par la ligne en pointillé 8. Avec cette pièce de contact 7 coopèrent une série de contacts 9a à 9f montés élastiquement et dont la position est réglable par une butée 10 de manière à ce que le contact soit établi sur chacun d'entre eux pour une valeur déterminée de l'intensité du courant traversant l'élément détecteur 3 par exemple de 0,5 à 3 ampères pour les contacts 9a à 9f. Selon la sélection des résistances 4 l'intensité du courant traversant l'élément détecteur 3 est égale à la totalité, à 1/2 , 1/3 ou 1/4 de l'intensité totale appelée par le consommateur soit 3, 6, 9 ou 12 ampères si la valeur d'une résistance 4 est égale à la valeur de la résistance interne du détecteur 3. Le récepteur de télécommande 11 est un contacteur qui établit la connexion, dans l'exemple de réalisation représenté soit sur le contact 9c, soit sur le contact 9f et le courant résultant de la connexion est envoyé à l'enroulement de commande 2 du contacteur.

Avec le mode de connexion représenté, le récepteur de télécommande 11 n'étant pas excité, la connexion de l'enroulement 2 est établie sur le contact 9c, ce qui correspond à la puissance utilisable minimale ou puissance de crise. Une seule résistance 4 étant en circuit, la moitié du courant consommé traverse l'élément détecteur 3 et le contact 9c est fermé lorsque l'intensité du courant consommé atteint 1,5 x 2 = 3 ampères et le contact 9f lorsque celle-ci atteint 3 x 2 = 6 ampères. En l'absence d'excitation du récepteur de télécommande 11, le disjoncteur déclenchera lorsque l'intensité consommée atteindra 3 ampères. Si au contraire il est excité et assure la connexion sur le contact 9f, le disjoncteur déclenchera pour 6 ampères. On conçoit que l'intensité maximale peut, par sélection du nombre des résistances 4, varier de 3 à 12 ampères et que l'intensité minimale peut être fixée entre 0,5 et 10 ampères, plus exactement entre le 1/6 ème et les 5/6 èmes de l'intensité maximale.

Dans le mode de réalisation de la figure 2, le disjoncteur est du type différentiel et il comporte un transformateur

6 0040146

différentiel 12 dont le secondaire 13 alimente l'enroulement 2 du déclencheur. Le dispositif détecteur de la valeur de l'intensité traversant l'élément détecteur 3 pourrait être identique à celui de la figure 1. A titre de variante il comporte un contact de détection de l'intensité maximale constitué par une vis réglable 14 et un contact de détection d'une intensité intermédiaire 15 porté par un linguet flexible 16 porté par un tube support fileté 17 guidé dans une portée 18, la position étant réglable par une vis 19 comprimant un ressort de rappel 20. Le récepteur de télécommande 11, à l'état non excité, établit la connexion entre le neutre en amont du transformateur différentiel 12 et le contact 14 et, à l'état non excité, la même connexion sur le contact 15. En conséquence le dispositif établit un courant de défaut susceptible de provoquer le fonctionnement du disjoncteur lors du contact de l'élément détecteur 3 soit avec le contact 15, soit avec le contact 14, selon l'état du récepteur de télécommande 11.

Les deux modes de réalisation ci-dessus décrits à titre d'exemples sont susceptibles de recevoir de nombreuses modifications sans sortir du cadre de l'invention telle que définie par les revendications.

0040146

Revendications

1. Un disjoncteur de puissance à téléréglage du seuil de fonctionnement comportant au moins un capteur de détection d'une position prédéterminée de l'élément de commande du déclencheur sensible à l'intensité consommée et un déclencheur de disjoncteur constitué par un élément électro-magnétique caractérisé en ce que ce capteur envoie, lorsque ladite position est atteinte et sous le contrôle d'un récepteur de télécommande centralisée, un courant de commande au déclencheur du disjoncteur.

2. Un disjoncteur de puissance selon la revendication 1, caractérisé en ce que le capteur est un élément de contact qui vient en contact avec le bilame constituant l'élément de commande du déclencheur au cours de la déformation de celui-ci, ce contact élastique ayant une position de fin de course réglable.

3. Un disjoncteur de puissance selon l'une quelconque des revendications 1 et 2, ce disjoncteur étant du type différentiel, caractérisé en ce que le capteur établit un courant de fuite supérieur au seuil du disjoncteur différentiel entre un point d'une phase en aval du transformateur différentiel et un point d'une autre phase en amont dudit transformateur différentiel.

4. Un disjoncteur de puissance selon l'une quelconque des revendications 1 à 3, caractérisé en ce qu'il comporte une pluralité de capteurs agissant pour différentes intensités de courant traversant le capteur de détection et correspondant à des fractions de l'intensité nominale de déclenchement du capteur de détection, les capteurs choisis en fonction des puissances normale et de crise allouées à l'usager étant connectés au moins pour l'un d'entre eux par l'intermédiaire d'un contacteur commandé par le récepteur de télécommande centralisée.

5. Un disjoncteur de puissance selon la revendication 3,
caractérisé en ce qu'il comporte en outre, de manière connue,
une série de résistances de dérivation sélectionnables pour
shunter l'élément détecteur et régler le seuil de déclenchement.

0040146

Fig.1

Fig.2

Office européen
des brevets

**RAPPORT DE RECHERCHE EUROPEENNE**

EP 81 40 0735

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendica-tion concernée | |
| | DE - C - 356 226 (A.E.G.)<br>* Page 2, lignes 42-68; figures 1-3 *<br>-- | 1 | H 02 J 13/00 |
| | FR - A - 1 038 284 (A. MURATORI)<br>* Page 2, colonne de gauche, lignes 34-45; figure *<br>-- | 1,2 | |
| | FR - A - 1 435 803 (C.G.E.)<br>* Page 1, colonne de gauche, ligne 35 - colonne de droite, ligne 21; page 2, colonne de gauche, ligne 44 - colonne de droite, ligne 20; figure 2 *<br>-- | 1-3,5 | **DOMAINES TECHNIQUES RECHERCHES (Int. Cl.³)**<br><br>H 02 J 13/00<br> 3/14<br>H 01 H 71/40<br> 71/74<br> 83/04<br> 83/22 |
| D | DE - A - 2 404 234 (LICENTIA)<br>* Page 6, lignes 1-8; figure 1 *<br>-- | 4 | |
| EL | EP - A - 0 033 273 (R. ALBERTI)<br>* Figure 1 *<br>---- | 1 | **CATEGORIE DES DOCUMENTS CITES**<br><br>X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons<br><br>&: membre de la même famille, document correspondant |

Le présent rapport de recherche a été établi pour toutes les revendications

| Lieu de la recherche | Date d'achèvement de la recherche | Examinateur |
|---|---|---|
| La Haye | 25-08-1981 | V. HELOT |

OEB Form 1503.1  06.78